# EUROPÄISCHE PATENTSCHRIFT

(11) **EP 0 781 958 B1**
(45) Veröffentlichungstag und Bekanntmachung des Hinweises auf die Patenterteilung: **27.06.2007**
(21) Anmeldenummer: 96116120.5
(22) Anmeldetag: 09.10.1996
(51) Int. Cl.: F17C 13/12, F17C 3/08

(54) **Vakuumisolierter Kryobehälter**
Vacuum insulated cryogenic container
Récipient cryogénique isolé par vide

(30) Priorität: 30.11.1995 DE 19544593
(43) Veröffentlichungstag der Anmeldung: 02.07.1997
(73) Patentinhaber: Air Liquide Deutschland GmbH, 40235 Düsseldorf (DE); Messer Group GmbH, 65843 Sulzbach (DE); Bayerische Motoren Werke Aktiengesellschaft, 80788 München (DE)
(72) Erfinder: Fieseler, Heinrich, 41541 Dormagen (DE); Kesten, Martin, Dr., 51503 Rösrath (DE); Meyer, Gesa, 41542 Dormagen (DE); Pehr, Klaus, 86391 Stadtbergen (DE)
(74) Vertreter: Kahlhöfer, Hermann

(56) Entgegenhaltungen:
- DE-A- 3 630 057
- DE-A- 4 121 321
- FR-A- 2 568 228
- US-A- 4 219 126

## Beschreibung

Die Erfindung betrifft einen vakuumisolierten Kryobehälter für die Speicherung tiefsiedender verflüssigter Gase nach dem Oberbegriff des Anspruchs 1.

Vakuumisolierte Kryobehälter sind stets mit einer aufwendigen Isolierung versehen, um die durch den Wärmeeinfall aus der Umgebung verursachte Verdampfung des tiefsiedenden verflüssigten Gases gering zu halten. Sie werden deshalb als doppelwandige Behälter ausgeführt, wobei ein das tiefsiedende verflüssigte Gas aufnehmender Innenbehälter in einem der Umgebungstemperatur ausgesetzten Außenbehälter gelagert ist. Die Isolierung wird dadurch erreicht, daß der Zwischenraum mit schlecht wärmeleitendem Material, beispielsweise Superisolation, ausgefüllt und nach Fertigstellung dieser Isolationsraum evakuiert wird.

Beim Einsatz der vakuumisolierten Kryobehälter als Speicher für mobile Anwendungen z. B. als Speicher von Kryokraftstoffen für den Fahrzeugantrieb, werden hohe sicherheitstechnische Anforderungen gestellt. Der Bruch des Vakuums kann hier plötzlich erfolgen, durch mechanische Einwirkungen bei einem Unfall oder ganz allmählich, wenn durch winzige Leckstellen Luft in den evakuierten Isolationsraum eintritt und sich dort abkühlt. Der Verlust des Vakuums bringt in beiden Fällen eine höhere Wärmeeinströmung mit sich, so daß das gespeicherte verflüssigte Gas schnell verdampft.

Sobald das gesamte flüssige Gas verdampft ist, erwärmt sich der Behälter und die in den Isolationsraum eingestömte Luft. Da die Luft durch ein kleines Leck nicht schnell genug abströmen kann entsteht ein Überdruck im Isolationsraum, der den Behälter beschädigt oder zerstört.

Um derartige Schadensfälle zu vermeiden hat man verschieden aufgebaute Sicherheitsventile am Außenbehälter angebracht.
(DE 3727891 C2)

Der im Innenbehälter durch die Verdampfung des tiefsiedenden verflüssigten Gases entstehende Druck wird dabei mittels einer Sicherheitsventilleitung in die Atmosphäre geleitet. Werden im Schadensfalle bei einem Unfall die Sicherheitsventile außer Funktion gesetzt, kommt es zu einem Druckanstieg, der den weit über dem Betriebsdruck liegenden Berstdruck des Kryobehälters übersteigen kann. Der tatsächliche Berstdruck liegt durch unterschiedliche Einflüsse, z. B. Mindestwanddikke des Kryobehälters, Anstieg der Zugfestigkeit des Behälterwerkstoffes bei tiefen Temperaturen und der Stützung des Innenbehälters bei plastischer Deformation am Außenbehälter bei mehr als dem zehnfachen Wert des Betriebsdruckes, der in einer Größenordnung von 5 bar liegt. Die aufgrund des hohen Berstdrucks beträchtliche gespeicherte Energie wird beim Bersten des Kryobehälters frei und kann einen immensen Schaden bewirken.

Der Erfindung liegt die Aufgabe zugrunde einen vakuumisolierten Kryobehälter, insbesondere einen Kryotank für Kryokraftstoffe von Fahrzeugen, zu schaffen, bei dem im Schadensfall ein unkontrolliertes Bersten aufgrund eines Druckanstiegs im Innenbehälter vermieden wird.

Ausgehend von dem im Oberbegriff des Anspruchs 1 berücksichtigten Stand der Technik, ist diese Aufgabe erfindungsgemäß gelöst mit dem im kennzeichnenden Teil des Anspruchs 1 angegebenen Merkmal.

Eine vorteilhafte Weiterbildung der Erfindung ist in den Unteransprüchen angegeben.

Wesentliches Merkmal des erfindungsgemäßen Kryobehälters ist, daß die Überdrucksicherung oberhalb des Betriebsdruckes, insbesondere oberhalb des an den Sicherheitsventilen eingestellten Sicherheitsdrukkes, aber unterhalb des Berstdruckes in der Wand des Innenbehälters eine Öffnung freigibt, über die im Schadensfall das Flüssiggas in das Hochvakuum des Isolationsraums und von dort über die bekannten Sicherungseinrichtungen in die Atmosphäre abströmt.

Untersuchungen haben dabei gezeigt, daß auf diese Weise abströmende Kryokraftstoffe wie z. B. Flüssigwasserstoff (LH₂), ohne Explosion aus dem Kryotank strömen. Aufgrund der Überdrucksicherung wird sichergestellt, daß der Druckabbau beim Überschreiten eines vorgegebenen Versagensdruckes, zum Beispiel 20 bar, an einer definierten Stelle des Innenbehälters und unter definierten Bedingungen erfolgt.

Die erfindungsgemäße Überdrucksicherung reduziert den Versorgungsdruck durch eine definierte Öffnung (Leck) direkt am Innenbehälter und damit die Gefährdung der Fahrzeuginsassen bei einem Unfall.

Erfindungsgemäß wird eine lokal begrenzte Überschreitung der Festigkeitskennwerte der Wand des Innenbehälters bei dem vorgegebenen Versagensdruck erreicht. Durch die Einarbeitung von Ein- bzw. Ausbuchtungen und/oder Kerben werden bei kryogenen Temperaturen Spannungsüberhöhungen und -konzentrationen erzeugt. Die Festigkeit des Wandwerkstoffes des Innenbehälters wird lokal an der Sollbruchstelle überschritten und aufgrund der begrenzten Dehnung eine Rißbildung eingeleitet. Der Riß wächst durch die Wand des Innenbehälters und es entsteht eine Öffnung.

Durch die Merkmale des Anspruches 2 ist die Sollbruchstelle eine vorwiegend in Längsrichtung verlaufende, nach innen gerichtete Einbuchtung. Die axiale Länge der Einbuchtung legt dabei die Rißlänge in Längsrichtung bei kryogenen Temperaturen fest. Die Einbuchtung bewirkt Spannungserhöhungen an der Außenseite des Innenbehälters durch zusätzliche Biegespannungsanteile. Die Dichtheit des Innenbehälters gegenüber dem Hochvakuum des Isolationsraumes ist durch die in die Behälterwand eingearbeitete Sollbruchstelle ohne zusätzliche Schraub- oder Schweißverbindungen gewährleistet. Verluste durch Permeation oder Lecks sind ausgeschlossen.

Die in die Behälterwand eingearbeitete Sollbruchstelle hält dabei dem für vakuumisolierte Kryobehälter vorgegebenen Prüfdruck (1,5-fache des Betriebsdruckes) bei 293K sicher Stand.

Alternativ wird eine Überdrucksicherung eines Innenbehälters ermöglicht, wenn aufgrund des Werkstoffes bzw. der Werkstoffdicke des Innenbehälters eine Sollbruchstelle nicht in die Behälterwand eingearbeitet werden kann, so daß ein hinreichend niedriger Versagensdruck unter Beachtung des Prüfdruckes des Innenbehälters nicht eingestellt werden kann.

Ein Ausführungsbeispiel der Erfindung ist in der Zeichnung dargestellt und wird im folgenden näher beschrieben.

Es zeigen:
- **Figur 1**:: ein vakuumisolierter Kryobehälter mit Überdrucksicherung des Innentanks
- **Figur 2**:: eine schematische Darstellung der Überdrucksicherung als Sollbruchstelle
- **Figur 3**:: eine schematische Darstellung der Überdrucksicherung als Armatur

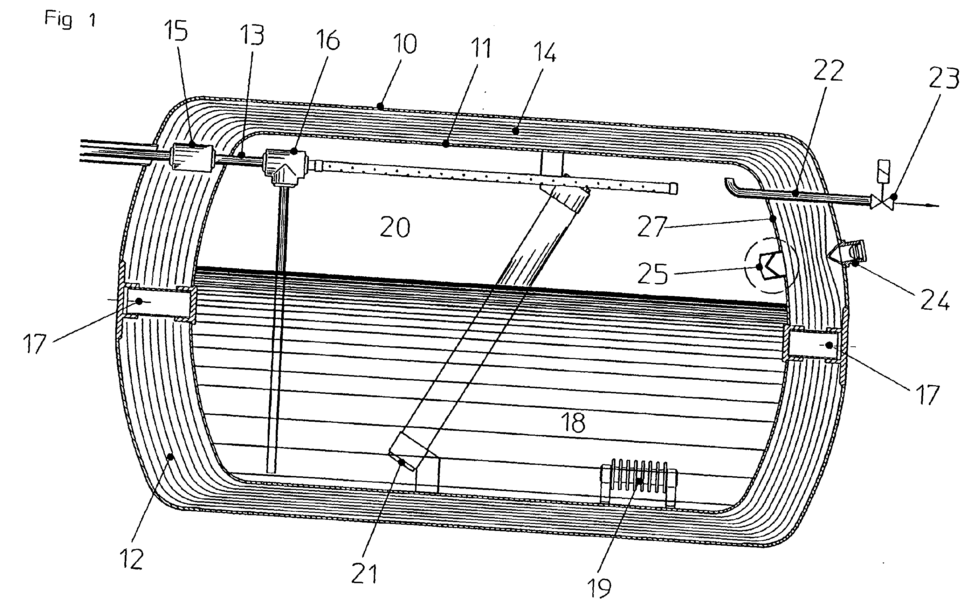

Die Figur 1 zeigt einen üblichen doppelwandigen vakuumisolierten Kryobehälter wie er für die Speicherung tiefsiedender verflüssigter Gase 18, wie LH₂ (verflüssigter Wasserstoff) oder LNG (verflüssigtes Erdgas) verwendet wird. Der doppelwandige Kryobehälter besteht aus Innenbehälter 11, Außenbehälter 10 und im Isolationsraum 12 angeordnetem isoliertem Material, beispielsweise Superisolation 14. Der Innenbehälter 11 ist über Halteelemente 17 mit dem Außenbehälter 10 verbunden. Die Füll- und Entnahmeleitung mit den Absperr- und Regelventilen 15, 16 ist mit 13 bezeichnet.

Über eine elektrische Heizung 19 wird ein Teil des tiefsiedenden verflüssigten Gases verdampft und im Gasraum 20 des Kryobehälters ein Betriebsdruck von beispielsweise 5 bar aufgebaut. Das tiefsiedende verflüssigte Gas strömt dabei durch Entnahmeleitung 13 zu einem nicht näher dargestellten Fahrzeugmotor. Der Füllstand des tiefsiedenden verflüssigten Gases 18 wird mit einem innerhalb des als Kryotank ausgebildeten Kryobehälters angeordneten Füllstandsensor 21 erfaßt und einer nicht näher dargestellten Füllstandsanzeige als Istwert zugeführt. In den Gasraum 20 des Innenbehälters 11 mündet eine Sicherheitsventilleitung 22 mit einem oder mehreren Sicherheitsventilen 23, die den Gasraum 20 mit der Atmosphäre verbindet. Die Sicherheitsventile 23 öffnen bei einem vorgegebenen Sicherheitsdruck, der über dem Betriebsdruck des Gasraumes 20 liegt. Mit einem am Außenbehälter 10 angeordneten Sicherheitsventil 24 ist der Kryobehälter gegenüber plötzlichem Druckanstieg im Isolationsraum 12 gegen Beschädigungen gesichert.

Am Innenbehälter 11 ist eine dem Sicherheitsventil 24 des Außenbehälters 10 gegenüberliegend angeordnete Überdrucksicherung 25 vorgesehen, die in Figur 1 nur schematisch dargestellt ist. Die Überdrucksicherung 25 dient im Schadensfall, d. h. beim Versagen der Sicherheitsventilleitung 22 mit den Sicherheitsventilen 23, der gezielten Druckregulierung bei vorgegebenem Versagensdruck pᵥ. Der Versagensdruck liegt dabei über dem Sicherheitsdruck pₛ. bei dem die Sicherheitsventile 23 ansprechen und über dem Prüfdruck pₚ. mit dem die Kryobehälter bei kryogenen Temperaturen von 293 K auf ihre Betriebssicherheit geprüft werden.

Mit der Überdrucksicherung 25 des Innenbehälters 11 wird bei Versagensdruck pᵥ. eine Verbindung zwischen dem Innenbehälter 11 und Isolationsraum 12 geschaffen bzw. freigegeben. Das in den lsolationsraum 12 eintretende Gas bzw. verflüssigte Gas strömt über das Sicherheitsventil 24 des Außenbehälters 10 ab.

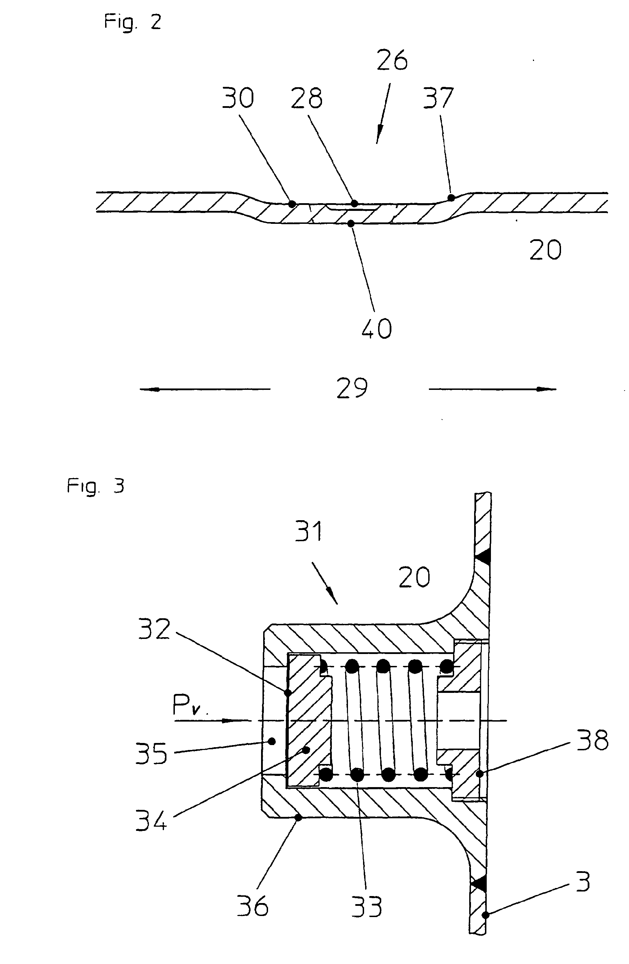

In Figur 2 ist eine als Sollbruchstelle ausgebildete Überdrucksicherung 25 dargestellt.

Eine lokale Überschreitung der Festigkeitskennwerte bei Versagensdruck pᵥ. wird bei dieser bevorzugten Ausbildung durch eine in die Wand 27 des Innenbehälters 11 eingearbeitete Sollbruchstelle 26 erreicht, wo von der idealrunden Behälterkontur abweichende Geometrien und/oder eingebrachte Kerben 28 zu Spannungsüberhöhungen und -konzentrationen führen.

Die Sollbruchstelle ist wie in Figur 2 dargestellt ausgebildet, wobei genaue Abmessungen abhängig von der Betriebsweise und den Konstruktionsmerkmalen des Kryobehälters spannungsanalytisch ermittelt werden. In die Behälterwand 27 ist an der im Gasraum 20 vorgesehenen Sollbruchstelle eine vorzugsweise vorwiegend in Längsrichtung 29 verlaufende, nach innen gerichtete Einbuchtung 37 eingebracht. Die Einbuchtung bewirkt Spannungserhöhungen an der Außenseite 30 des Innenbehälters 11 durch zusätzliche Biegespannungsanteile.

Bei unzulässigem Druckanstieg wird bei Erreichen des Versagensdruckes lokal die Festigkeit des Werkstoffes der Wand 27 bei kryogenen Temperaturen überschritten. Dehnung ist jedoch nur begrenzt möglich, was zur Einleitung eines Risses führt. Der Riß wächst durch die Behälterwand und es entsteht ein Leck. Durch die Öffnung 40 (gestrichelt dargestellt) strömt der Inhalt des Innenbehälters 11 in das Hochvakuum des Isolationsraumes 12 und gelangt über des Abpumpsicherheitsventil 24 nach außen. Die axiale Länge der Einbuchtung 37 ist dabei so gewählt, daß es zu keiner kritischen Rißausbreitung in Längsrichtung 29 kommt. Außerhalb der Sollbruchstelle 26 ist aufgrund des niedrigen Spannungsniveaus kein Rißwachstum möglich.

Gemäß Figur 3 ist die Überdrucksicherung als Armatur 31 ausgebildet, die einen Grundkörper 36 aufweist, der an der Innenbehälterwand 27 angebracht, z. B. mit der Wand 27 verschweißt, ist. Die Überdrucksicherung 25 besteht im wesentlichen aus einer dünnen Membran 32, die von einer auf den Innendruck reagierenden Druckfeder 33 gestützt wird. Die Membran 32, die über die Öffnung 35 des Grundkörpers 36 gelötet oder geschweißt ist, erfüllt die Forderungen nach Dichtheit gegen Hochvakuum. Sie wird sehr dünn ausgelegt, erhält keine tragende Funktion und ist ausschließlich über einen, möglicherweise porösen, Stützkörper 34 von der Druckfeder 33 gehalten. Die Druckfeder 33 wird mittels eines in den Grundkörper 36 eingeschraubten Druckstückes 38 vorgespannt, so daß sie bei Erreichen des kritischen Versagensdruckes zusammengedrückt wird und die dann ungestützte Membran aufgrund der aufgezwungenen Dehnung, oder auch durch einen in der Feder liegenden Dorn, zerstört wird. Der Inhalt des Innenbehälters 11 strömt in den Isolationsraum 12 ab.

Das elastische Verhalten des Werkstoffes der Druckfeder 33 ist im wesentlichen temperaturunabhängig, so daß sich die Funktionsweise der Einrichtung bei Abkühlung auf kryogene Temperaturen nicht ändert. Diese aufwendigere Gestaltungsweise bietet sich an, wenn aufgrund des Werkstoffverhaltens ein hinreichend niedriger Wert des Versagensdruckes unter Beachtung des Prüfdruckes über in die Wand des Innenbehälters 11 eingearbeitete Ein- bzw. Ausbuchtungen 37 und / oder Kerben 28 nicht eingestellt werden kann.

## Patentansprüche

1. Vakuumisolierter Kryobehälter für die Speicherung tiefsiedender verflüssigter Gase, insbesondere für brennbare Kryokraftstoffe wie flüssiger Wasserstoff (LH₂) oder flüssiges Erdgas (LNG), mit einem Außenbehälter und einem im Außenbehälter gelagerten, die Gase aufnehmenden Innenbehälter und einer Einrichtung zur Sicherung des Außenbehälters gegen Druckanstieg in dem zwischen den Behältern vorgesehenen Isolationsraum, wobei an dem Innenbehälter (11) eine Einrichtung zur Überdrucksicherung (25) angeordnet ist, welche bei einem vorgegebenen Versagensdruck (pᵥ) eine Öffnung (40) zwischen dem Innenbehälter (11) und dem Isolationsraum (12) freigibt, **dadurch gekennzeichnet, daß** die Überdrucksicherung (25) als Sollbruchstelle (26) ausgebildet ist, welche in Form von Kerben (28) und/oder Ein- bzw. Ausbuchtungen (37) in die Wand (27) des Innenbehälters (11) eingearbeitet ist.

2. Vakuumisolierter Kryobehälter nach Anspruch 1, **dadurch gekennzeichnet, daß** die Überdrucksicherung (25) als in Längsrichtung verlaufende Einbuchtung (37) in die Wand (27) des Innenbehälters (11) eingearbeitet ist.

## Claims

1. Vacuum insulated cryogenic container for storing low-boiling liquefied gases, in particular for combustible cryogenic fuels, such as liquid-hydrogen (LH₂) or liquid natural gas (LNG), with an external container and an internal container, which is mounted in the external container and receives the gases, and with a device for protecting the external container against a rise in pressure in the insulation space provided between the containers, with a device for overpressure protection (25) being arranged on the internal container (11) and, at predefined failure pressure (pᵥ), releasing an opening (40) between the internal container (11) and the insulation space (12), **characterized in that** the overpressure protection (25) is designed as a predetermined breaking point (26) which is incorporated into the wall (27) of the internal container (11) in the form of notches (28) and/or indentations or bulges (37).

2. Vacuum insulated cryogenic container according to Claim 1, **characterized in that** the overpressure protection (25) is incorporated into the wall (27) of the internal container (11) as an indentation (37) running in the longitudinal direction.

## Revendications

1. Récipient cryogénique isolé par vide pour stocker des gaz bouillant bas et liquéfiés, notamment pour des carburants cryogéniques combustibles comme l'hydrogène liquide (LH₂) ou le gaz naturel liquide (LNG), avec un réservoir extérieur et avec un réservoir intérieur qui est monté dans le réservoir extérieur et qui reçoit les gaz, et avec un dispositif pour la protection du réservoir extérieur contre la hausse de la pression dans l'espace d'isolation prévu entre les réservoirs, un dispositif de protection contre la surpression (25) étant agencé sur le réservoir intérieur (11), lequel dispositif de protection contre la surpression libère en cas d'une défaillance de la pression (pᵥ) prédéterminée une ouverture (40) entre le réservoir intérieur (11) et l'espace d'isolation (12), **caractérisé en ce que** la protection contre la surpression (25) est réalisée comme point destiné à la rupture (26) qui est incorporé en forme d'encoches (28) et/ou en forme d'échancrures, ou de bulges (37) dans la paroi (27) du réservoir intérieur (11).

2. Récipient cryogénique isolé par vide selon la revendication 1, **caractérisé en ce que** la protection contre la surpression (25) est incorporée dans la paroi (27) du réservoir intérieur (11) en tant qu'échancrure (37) s'étendant en direction longitudinale.
